# EUROPEAN PATENT SPECIFICATION

(11) **EP 1 173 019 B1**
(45) Date of publication and mention of the grant of the patent: **22.04.2009**
(21) Application number: 01306111.4
(22) Date of filing: 16.07.2001
(51) Int. Cl.: H04N 7/173, H04N 7/16

(54) **Apparatus and method for processing description information of multimedia data**
Gerät und Verfahren zur Verarbeitung von Beschreibungsinformationen für Multimediadaten
Appareil et procédé de traitement de l'information descriptive de données multimédia

(30) Priority: 14.07.2000 KR 2000040591
(43) Date of publication of application: 16.01.2002
(73) Proprietor: LG ELECTRONICS INC., Seoul (KR)
(72) Inventor: Lee, Jin Soo, Songpa-Ku, Seoul (KR); Song, Jung Min, Seocho-Ku, Seoul (KR); Yoon, Kyoung Ro, Kangnam-Ku, Seoul (KR)
(74) Representative: Cabinet Plasseraud

(56) References cited:
- WO-A-99/21338
- US-A- 5 754 939
- US-A- 5 973 683

## Description

### BACKGROUND OF THE INVENTION

### 1. Field of the Invention

The present invention relates to an apparatus and a method for processing description information of multimedia data reflecting a user's preference, and in particular to an apparatus and a method for processing description information of multimedia data which is capable of reflecting efficiently a user's preference about multimedia by making a usage history of a user by adding description information to multimedia data and managing the usage history of the user efficiently.

### 2. Description of the Prior Art

Recently, according to increase of multimedia related services such as a digital broadcast, multimedia service providers have tried to provide more improved user adaptive services. In a method disclosed in U.S. patent No. 5,861,884, a help is provided to each of users by making a usage history about frequent used service items of each user and a user interface applicable to each user is provided by using the usage history. In more detail, by describing the help as a tree format, levels of articles can be changed according to the number of request times by the user (i.e., a certain articles placed at lower levels can be placed at higher levels when the user uses the certain article frequently), accordingly a retrieval path for retrieving a user request item can be shorten.

In addition, in a method disclosed in U.S. patent No. 5,835,088, functions of multimedia buttons can be set as short-cut keys according to a user's request, accordingly a more efficient user applicable interface can be provided.

In order to obtain a user applicable multimedia service, a method for reflecting a user's preference through user history information is used. In more detail, a method for retrieving and displaying multimedia by reflecting a user's preference is used.

In a method disclosed in U.S. patent No. 5,416,693, a display operation preference (for example, replay, fast forward, etc.) of a user is stored in a history storing unit, multimedia data is segmented, a user's preference by the segments on the basis of the display operation preference is stored in the history storing unit as a point format. More intelligent display methods are disclosed in U.S. patent No. 5,861,884 and No. 5,835,088. In more detail, a segment replayed many times is defined as a more important segment, in performing of a multimedia search function, the segment replayed many times is displayed more slowly than a normal display speed.

In a method disclosed in WIPO No.9,747,135, a user's preference channel and user's preference device information (for example, a volume) of each channel are stored in the history storing unit, a user applicable circumstances is provided on the basis of the stored information.

In a method disclosed in U.S. patent No. 5,758,259, when a program guide is provided to a user, the program guide having lots of quantity is not transmitted as it is, but general subscription information of a user is stored, and the program guide by each user is provided on the basis of the stored subscription information concentrated on a preferred genre of each user.

In a method disclosed in U.S. patent No. 5,734,444, a user preference program is automatically selected and recorded on the basis of a multimedia subscription history of a user. A user applicable service using the above-mentioned method has been commercially provided in a Tivo/Replay TV in U.S. and has been regarded as a very important field.

Accordingly, in the above-mentioned conventional method, as a method reflecting the latest preference information of a user, user's history information can be used efficiently in a field providing preference information of a user having a certain condition.

Recently, a smart card concept has been introduced in order to provide not a service focused on a server or a device but a service focused on a user.

In more detail, in a method disclosed in U.S. patent No. 5,814,798, a user applicable service is consistently provided to a user by recording user's preference information on the smart card.

The above-mentioned service methods according to the prior art are mainly used in video services such as a VOD (Video On Demand), a Pay per View, but recently the biggest application field of the conventional service methods is a broadcast field as a digital broadcast is activated. In more detail, a user preference program can be automatically stored or a program guide can be made on the basis of user preference programs and user preference time. However, contrary to general video services, in broadcast data of a broadcast field, most of programs are the same programs having different content.

For example, a serial drama has common characteristics such as the same actor and the same director or a news program has common characteristics such as the same anchor and the same reporting field. Excluding parts directly related to contents of the programs, the above-mentioned programs have common characteristics (i.e., the same director in the serial drama or the same anchor in the news program) even they are televised at different time.

When a certain information is described every time in a usage history of a user without considering common characteristics, it is a waste of storing space, a processing process of a certain information is increased, information of a broadcast program can not be used efficiently, accordingly a storing space and a processing time are used wastefully.

### SUMMARY OF THE INVENTION

The subject matter of the invention is set out in the claims.

### BRIEF DESCRIPTION OF THE DRAWINGS

Figure 1 is a block diagram illustrating a processing system of multimedia data reflecting a user's preference in accordance with the present invention;
Figure 2 is a block diagram illustrating a first embodiment of description information added to multimedia data in accordance with the present invention;
Figure 3 illustrates a usage history of a user with list items in accordance with a first embodiment of the present invention;
Figure 4 is a block diagram illustrating description information added to multimedia data in accordance with a second embodiment of the present invention;
Figure 5 is a block diagram illustrating description information added to multimedia data in accordance with a third embodiment of the present invention;
Figure 6 is a block diagram illustrating description information added to multimedia data in accordance with a fourth embodiment of the present invention;
Figure 7 illustrates a usage history of a user with list items in accordance with a second embodiment of the present invention;
Figure 8 illustrates a usage history of a user with list items in accordance with a third embodiment of the present invention; and
Figure 9 illustrates a usage history of a user with list items in accordance with a fourth embodiment of the present invention.

### DETAILED DESCRIPTION OF THE PREFERRED EMBODIMENT

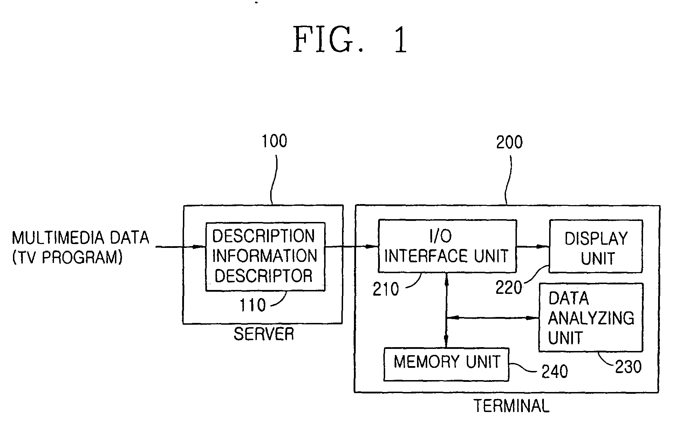

Figure 1 is a block diagram illustrating a processing system of multimedia data reflecting a user's preference in accordance with the present invention. As depicted in Figure 1, a multimedia data processing system reflecting a user's preference includes a server 100 providing multimedia data to a user, a description information descriptor 110 of the server 100 adding description information to the multimedia data in order to extract user preference information of the multimedia data, a terminal 200 receiving the multimedia data and displaying the received multimedia data to a user, an I/O (input/output) interface unit 210 of the terminal 200 receiving the multimedia data and transmitting the user preference information to the server 100, a data analyzing unit 230 analyzing the description information added in the description information descriptor 110, and a memory unit 240 storing description information according to the analysis result.

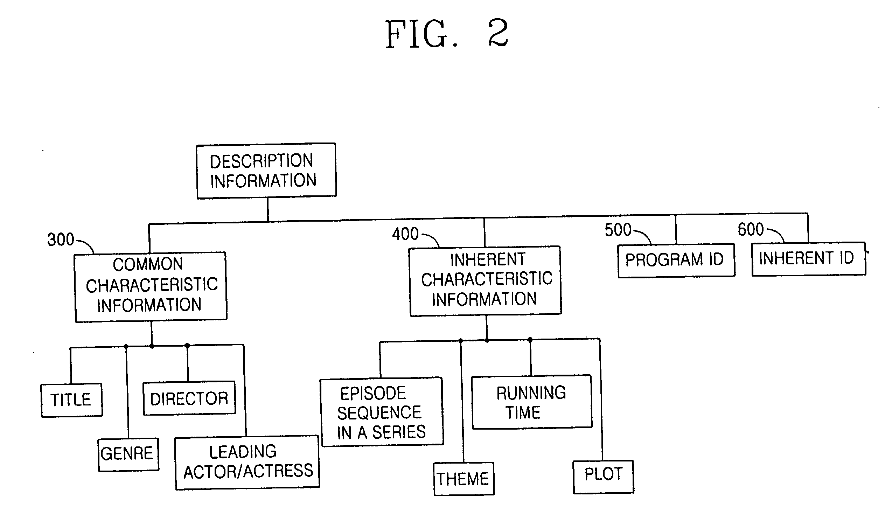

Figure 2 is a block diagram illustrating a first embodiment of description information added to multimedia data in accordance with the present invention. As depicted in Figure 2, description information added to serially televised multimedia data (program) such as a serial drama includes common characteristic information 300 about a director, a leading actor (actress), a title, a genre, etc., inherent characteristic information 400 about an episode sequence of a program, a running time of a program, a theme, a plot, etc. of the multimedia data (program), a program ID (Identification) 500 for judging whether the multimedia data (program) is the same program (for example, one episode of serial drama) having the common characteristic information 300, and an inherent ID (Identification) for classifying multimedia data.

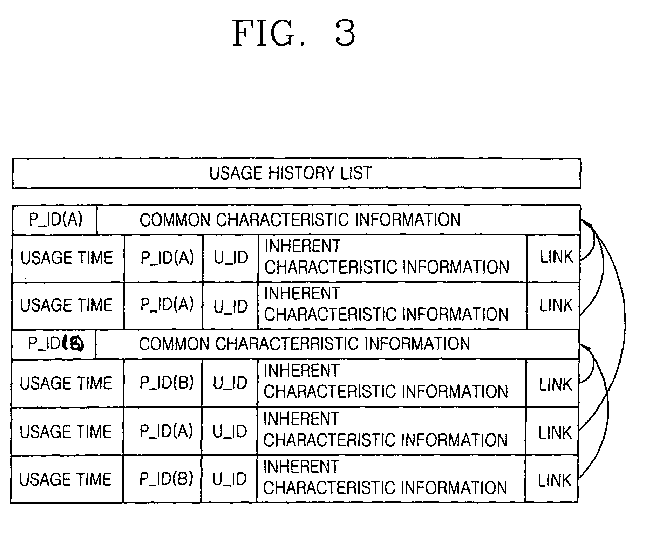

Figure 3 illustrates a usage history of a user with list items in accordance with a first embodiment of the present invention. As depicted in Figure 3, a list constructed with the program ID 500 and the common characteristic information 300 is defined as a common list, a list constructed with a usage time, the program ID 500, the inherent ID 600 and the inherent characteristic information 400 is defined as an inherent list, the inherent list is linked to the common list.

An apparatus and a method for processing description information of multimedia data in accordance with the present invention will now be described with reference to accompanying Figures 1, 2 and 3.

In processing of multimedia data of an eight-part series, the description information descriptor 110 of the server 100 classifies the common characteristic information 300 into a title, a director, a genre, a leading actor/actress, etc. and classifies the inherent characteristic information into an episode sequence, a running time of a program, a theme, a plot, etc. In addition, the program ID 500 of the multimedia data is defined, the inherent ID 600 is defined in order to classify the multimedia data.

After that, when a user selects 'the first episode of a series', the description information descriptor 110 adds the common characteristic information 300, the inherent characteristic information 400 and the inherent ID 600 to the multimedia data ('the first episode of the series) and transmits it to each terminal 200. And, the user watches 'the first episode of the series' transmitted from the I/O interface unit 210 through the display unit 220.

Herein, the data analyzing unit 230 classifies the multimedia data ('the first episode of the series') into the inherent characteristic information 400, the common characteristic information 300, the program ID 500 and the inherent ID 600, and the memory unit 240 stores the multimedia data as list items as depicted in Figure 3.

In more detail, the program ID 500 is stored in P_ID, contents such as a title, a director, a genre, a main actor/actress, etc. of the common characteristic information 300 are stored in a common characteristic information item, contents such as the episode sequence, the running time of a program, a theme, a plot, etc. of the inherent characteristic information are stored in an inherent characteristic information item. In addition, the inherent ID 600 is stored in U_ID, a usage time of the user is stored in a usage time item.

After that, when a user selects 'the second episode of the series', the description information descriptor 110 adds common characteristic information 300, an inherent characteristic information 400, a program ID 500, an inherent ID 600 to 'the second episode of the series' and transmits it. Then, the user watches 'the second episode of the series' transmitted through the I/O interface unit 210 on the display unit 220.

Herein, a program ID 500 of 'the second episode of the series' is compared with the program ID 500 stored in the memory unit 240. The program ID 500 of 'the second episode of the series' already exists in the memory unit 240 (because, it is another episode of the same series as the 'first episode of the series'), an inherent list of 'the second episode of the series' is stored in the memory unit 240 and is linked to the common list.

In addition, when the user selects 'the first episode of another series', a program ID 500 of 'the first episode of another series' is compared with the program ID 500 stored in the memory unit 240. Herein, the program ID 500 of 'the first episode of another series' does not exist in the memory unit 240, a common list of 'the first episode of another series' is stored in the memory unit 240. After that, an inherent list of 'the first episode of another series' is stored in the memory unit 240 and is linked to the common list.

After that, when the user selects 'the third episode of the series', a program ID 500 of 'the third episode of the series' already exists in the memory unit 240, an inherent list of 'the third episode of the series' is stored in the memory unit 240 and is linked to the common list of 'the first episode of the series'.

On the basis of above-mentioned embodiments, the description information descriptor 110 is defined as below description information added to the multimedia data and transmitted to the terminal 200.

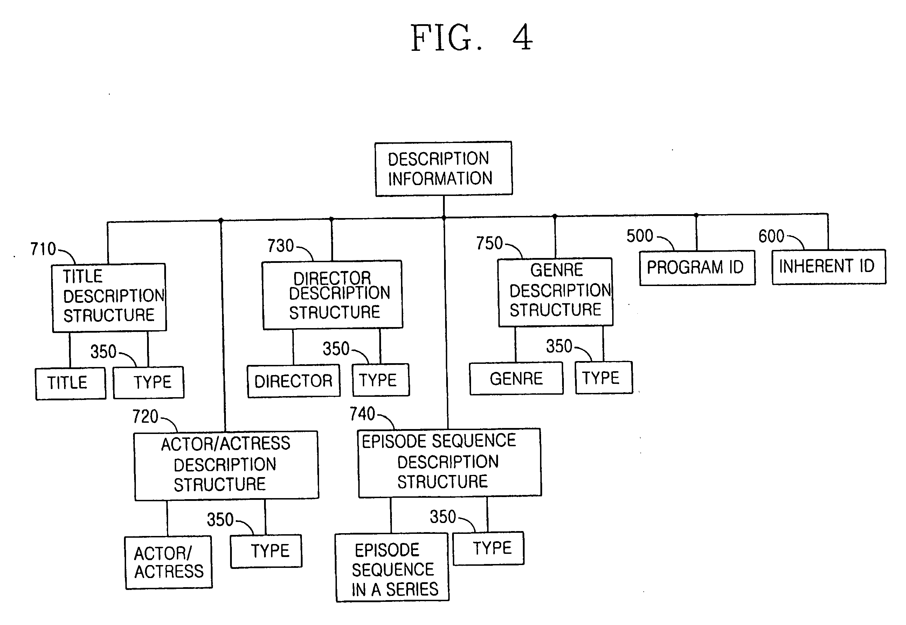

1) Figure 4 is a block diagram illustrating description information added to multimedia data in accordance with a second embodiment of the present invention. As depicted in Figure 4, the description information description unit 110 defines multimedia data as a title description structure 710, a director description structure 730, an actor description structure 720, an episode sequence structure 740 and a genre description structure 750, a program ID 500 for distinguishing whether the multimedia data is the same program, and an inherent ID 600. The title description structure 710 is hierarchically subdivided into title information and type information 350. The director description structure 730 is hierarchically subdivided into director information and type information 350. The genre description structure 750 is subdivided into genre information and type information 350.
   Each type information 350 classifies each characteristic information (title, director, genre) into common characteristic information 300 and inherent characteristic information 400.
   Then the classified characteristic information is stored in the memory unit 240 in order to avoid duplication.
   In other words, when a user subscripts a program, the data analyzing unit 230 compares a program ID 500 of a present subscription program with pre-stored program IDs 500, when the program ID 500 of the present subscription program is already stored in the memory unit 240, only the inherent list of the present subscription program is stored in the memory unit 240, when the program ID 500 of the present subscription program is not stored in the memory unit 240, the inherent list and the common list are stored in the memory unit 240.
   Accordingly, by managing the memory unit 240 with the above-mentioned method, it is possible to avoid duplication in storing of the common characteristic information.

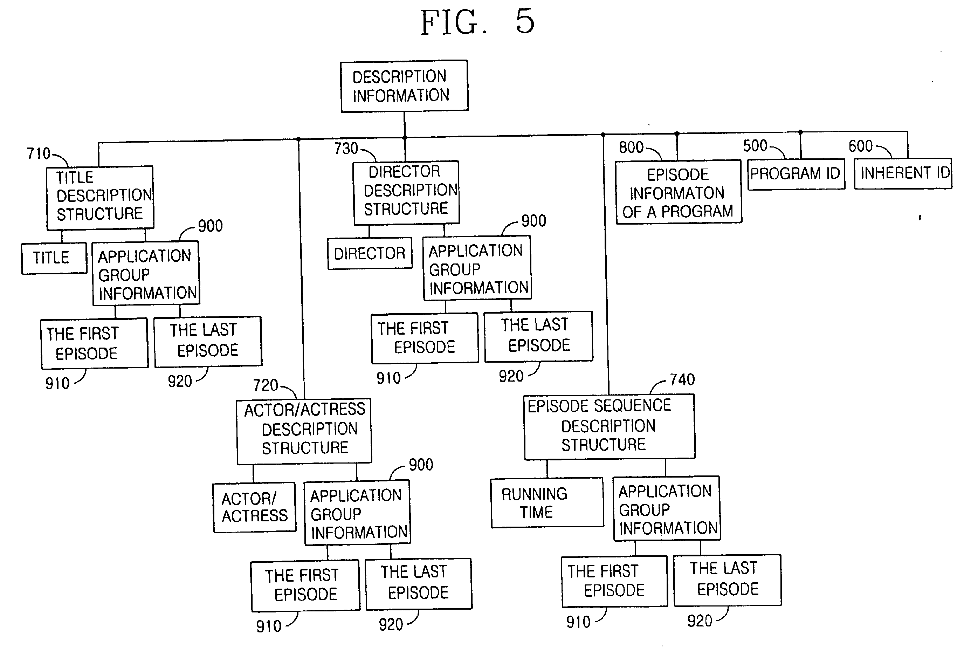

2) Figure 5 is a third embodiment of description information added to multimedia data in accordance with the present invention. As depicted in Figure 5, the description information descriptor 110 classifies description information into an inherent ID 600 for differentiating multimedia data from other multimedia data, a program ID 500 for indicating the multimedia data is one of a series, episode information for indicating the episode sequence of the multimedia data, a title description structure 710, a director description structure 730, an actor/actress description structure 720 and an episode sequence description structure 740. The title description structure 710 is subdivided into title information and application group information 900, the director description structure 730 is subdivided into director information and application group information 900, the actor/actress description structure 720 is subdivided into actor information and application group information 900, and the episode sequence description structure 740 is subdivided into the episode sequence information and application group information 900. Each application group information 900 is subdivided into the first episode 910 and the last episode 920.
   The episode information is for indicating the episode sequence of the multimedia, and the application group information 900 indicates whether each characteristic information is adapted to the whole episodes of multimedia data or some episodes of the multimedia data. In more detail, the application group information is subdivided into the first episode 910 and the last episode 920. For example, in the director description format 900, when the first episode 910 is '1' and the last episode is '8', it means the same director from the first episode to the eighth episode in an eighth-part series. Herein, a present subscription episode is described as the last episode 920, when the last episode is determined, the determined last episode 920 is described.
   In more detail, when a user subscripts 'the third episode of a series', the description information descriptor 110 transmits multimedia data having an inherent ID 600, a program ID 500, '3' as episode information, a director of a director description structure 730, '1' as the start episode information 910 and '3' as the last episode information 920. Herein, the last episode information 920 can be designated in advance, when the eighth episode is the last episode 920, '8' is designated as the last episode information 920.
   In the description information added to multimedia data in accordance with the third embodiment of the present invention, information for indicating each characteristic information is applicable to only a pertinent episode or all episodes is further included.

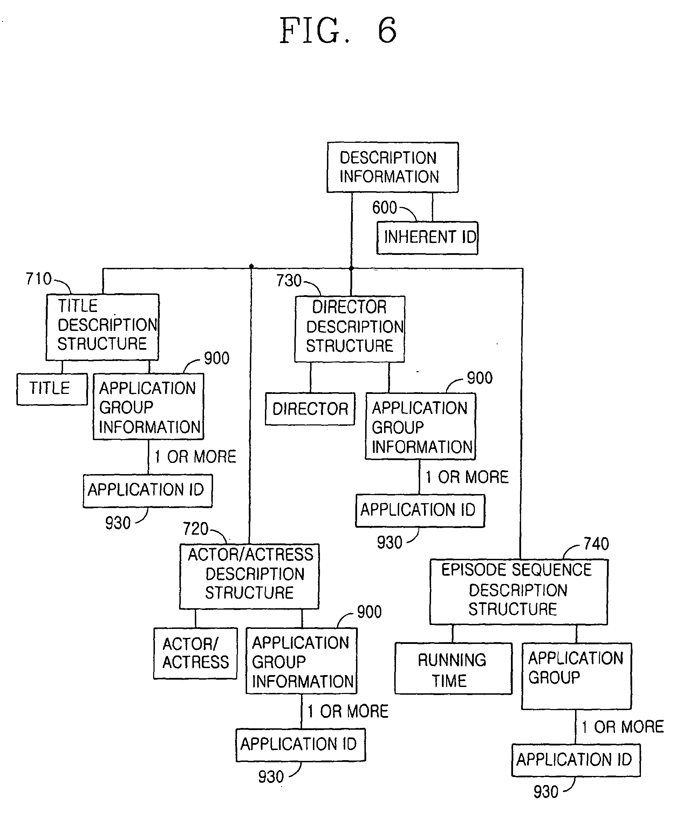

3) Figure 6 is a block diagram illustrating description information added to multimedia data in accordance with a fourth embodiment of the present invention. As depicted in Figure 6, when the multimedia data is not a series, the description information descriptor 110 classifies description information into an inherent ID 600 for differentiating multimedia data from other multimedia data, a title description structure 710, a director description structure 730, an actor/actress description structure 720 and an episode sequence description structure 740. The title description structure 710 is subdivided into title information and application group information 900, the director description structure 730 is subdivided into director information and application group information 900, the actor/actress description structure 720 is subdivided into actor information and application group information 900, and the episode sequence description structure 740 is subdivided into the episode sequence information and application group information 900. Each application group information 900 has not less than one application ID as a subordinate item.

Each application group information 900 has the application ID 930 in order to check whether each characteristic information is applicable to only the pertinent multimedia data or also other multimedia data.

The above-mentioned description information added to multimedia data in accordance with the fourth embodiment of the present invention can be efficiently used for not a series but multimedia data having lots of common characteristic information such as a news program. There can be not less than one application ID 930 of the application group information 900. Information about programs, in which the common characteristic information 300 is applicable, is displayed through the application ID 930 of the multimedia data.

A method for managing a user history by storing multimedia data from the description information descriptor 110 in the memory unit 240 will now be described.

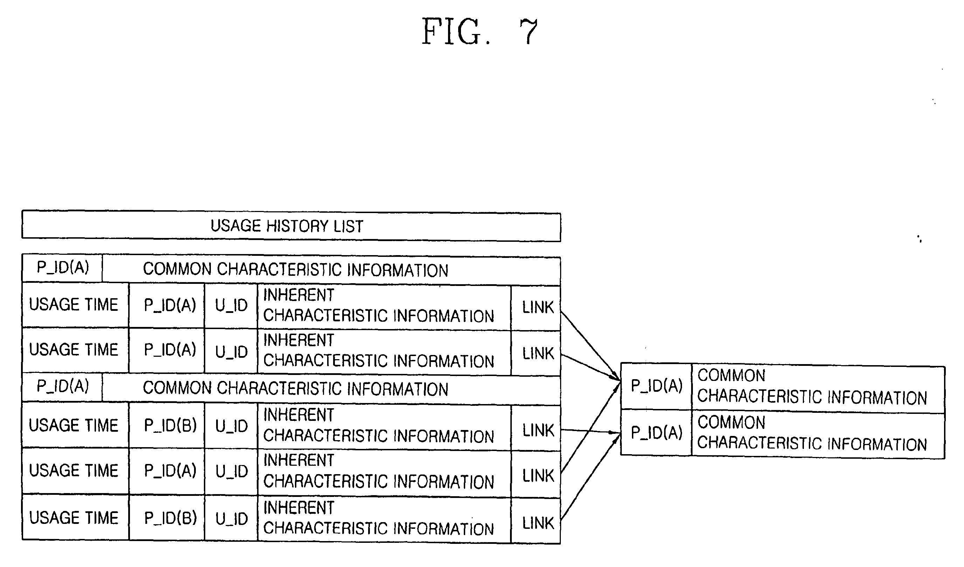

1) Figure 7 illustrates a usage history of a user with list items in accordance with a second embodiment of the present invention. As depicted in Figure 7, the memory unit 240 links an inherent list to a common list of another memory unit storing the common characteristic information 300.
   Only inherent characteristic information 400 is stored in each item of the inherent list, the common characteristic information is stored and managed in not a usage history list but another memory unit. In more detail, only inherent characteristic information 400 of a pertinent item is described in each item of the inherent list, the common characteristic information 300 is stored in an additional memory unit (not shown), each item of the inherent list includes link information for linking to the common characteristic information 300. A smart card can be used as the additional memory unit.

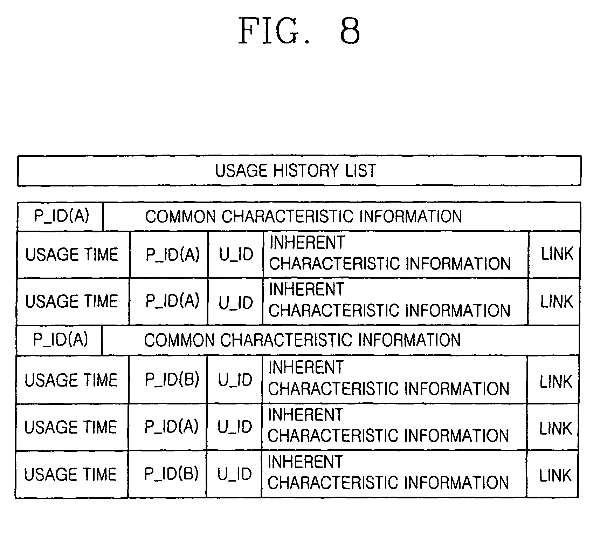

2) Figure 8 illustrates a usage history of a user with list items in accordance with a third embodiment of the present invention. As depicted in Figure 8, in the usage history of the user, a list including a program ID 500, common characteristic information, an inherent ID 600, a usage time and inherent characteristic information by each multimedia data is defined as an inherent list.
   The inherent list processes a usage history with only the program ID 500. In more detail, because each multimedia data has a program ID 500 and common characteristic information also has the same program ID 500, although there is no link information in each list, the inherent list and the common list can be connected by connecting both program ID by a mapping or an address reference methods, etc. As described above, the method for connecting the common characteristic information 300 of multimedia data with the program ID 500 can be used when there is the small quantity of data.

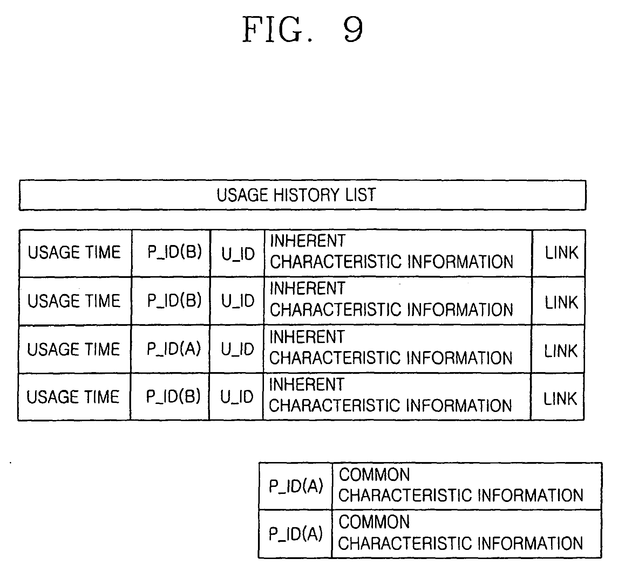

3) Figure 9 illustrates a usage history of a user with list items in accordance with a fourth embodiment of the present invention. As depicted in Figure 4, a list including a usage time, a program ID 500, an inherent ID 600, an inherent characteristic information 400 is defined as an inherent list, a list including a program ID 500, a common characteristic information 300 as a common list, the inherent list and the common list are stored in an additional memory unit (not shown).

Only inherent characteristic information 400 is described in the inherent list, the common characteristic information 300 is an additional memory unit (not shown) only managing the common characteristic information, each item of the inherent list includes link information for linking to the common characteristic information.

As described above, the method for connecting the common characteristic information about the same multimedia data with the program ID 500 can be used when the quantity of data is small.

As above-described embodiments, in a multimedia service reflecting a user preference, multimedia can be efficiently managed with a user's history, accordingly a memory unit can be efficiently used. In particular, in a digital TV circumstances, because most of broadcast data are series, an apparatus and a method for processing description information of multimedia data in accordance with the present invention can be efficiently used for applications reflecting a user preference about programs.

The apparatus and the method for processing description information of multimedia data can easily perform grouping of lots of multimedia data belonging to series programs by displaying commonly applicable data as the same result with common information or application group information without retrieving characteristic information.

## Claims

1. A method for processing, at a terminal, description information of a program, the program comprising a series of multimedia data episodes, the method comprising the step of:
receiving, at the terminal, description information and a multimedia data episode, wherein the description information for a multimedia data episode comprises:
a first characteristic information (300) commonly applicable to each multimedia data episode of the program;
a second characteristic information (400) inherently applicable to that multimedia data episode;
a first identification (500) for identifying the program; and
a second identification (600) for identifying that multimedia data episode;
**characterised in that** the method comprises:
comparing the first identification with one or more program identifiers stored in a memory; and
if the first identification is not stored in the memory, then storing the first characteristic information and the first identification as a first item of data; storing the second characteristic information and the second identification as a second item of data; and linking the second item of data to the first item of data; and
if the first identification is stored in the memory, then storing the second characteristic information and the second identification as a second item of data; and linking the second item of data to a stored first item of data comprising the first characteristic information and the first identification.

2. A method according to any one of the preceding claims, wherein the first characteristic information includes one of a title, a genre, director information and actor information.

3. A method of according to any one of the preceding claims, wherein the second characteristic information includes a plot, an episode identifier and a running time of the multimedia data episode.

4. An apparatus adapted to carry out a method according to any one of the preceding claims.

5. A computer program which, when executed by a computer, carries out a method according to any one of claims 1 to 3.

6. A computer readable medium carrying a computer program according to claim 5.

## Patentansprüche

1. Verfahren zur Verarbeitung von Beschreibungsinformationen eines Programmes an einem Endgerät, wobei das Programm eine Reihe von Multimediadaten-Episoden umfasst, wobei das Verfahren folgende Schritte umfasst:
Empfangen von Besehreibungsinformationen und einer Multimediadaten-Episode an dem Endgerät, wobei die Beschreibungsinformationen for eine Multimediadaten-Episode umfassen:
eine erste charakteristische Information (300), die für jede Multimediadaten-Episode des Programmes gleichermaßen zutreffend ist,
eine zweite charakteristische Information (400), die speziell für diese Multimediadaten-Episode zutreffend ist,
ein erstes Kennzeichen (500) zum Identifizieren des Programms und
ein zweites Kennzeichen (600) zum identifizieren dieser Multimediadaten-Episode,
**dadurch gekennzeichnet, dass** das Verfahren umfasst:
Vergleichen des ersten Kennzeichens mit einer oder mehreren, in einem Speicher gespeicherten Programmkennung(en) und
wenn das erste Kennzeichnen nicht im Speicher gespeichert ist, Speichern der ersten charakteristischen Information und des ersten Kennzeichens als erstes Datenelement, Speichern der zweiten charakteristischen Information und des zweiten Kennzeichens als zweites Datenelement und Verbinden des zweiten Datenelements mit dem ersten Datenelement und
wenn das erste Kennzeichen im Speicher gespeichert ist, Speichern der zweiten charakteristischen Information und des zweiten Kennzeichens als zweites Datenelement und Verbinden des zweiten Datenelements mit einem gespeicherten ersten Datenelement, das die erste charakteristische Information und das erste Kennzeichnen umfasst.

2. Verfahren nach einem der vorangehenden Ansprüche, wobei die erste charakteristische Information eines der folgenden einschließt: einen Titel, ein Genre, Informationen zum Regisseur und Informationen zu den Darstellern.

3. Verfahren nach einem der vorangehenden Ansprüche, wobei die zweite charakteristische Information eine Handlung, eine Episodenkennung und eine Laufzeit der Multimediadaten-Episode einschließt.

4. Vorrichtung, die so angepasst ist, dass sie ein Verfahren nach einem der vorangehenden Ansprüche ausführt.

5. Computerprogramm, das bei der Ausführung durch einen Computer ein Verfahren nach einem der Ansprüche 1 bis 3 ausführt.

6. Computerlesbares Medium, das ein Computerprogramm nach Anspruch 5 ausführt.

## Revendications

1. Procédé de traitement, au niveau d'un terminal, d'informations de description d'un programme, le programme comprenant une série d'épisodes de données multimédia, le procédé comprenant l'étape suivante:
recevoir, au niveau du terminal, des informations de description et un épisode de données multimédia, les informations de description pour un épisode de données multimédia comprenant :
une première information caractéristique (300) applicable de façon commune à chaque épisode de données multimédia du programme ;
une seconde information caractéristique (400) applicable de façon inhérente audit épisode de données multimédia ;
une première identification (300) pour identifier le programme ; et
une seconde identification (600) pour identifier ledit épisode de données multimédia ;
**caractérisé en ce que** le procédé comprend les étapes suivantes:
comparer la première identification à un ou plusieurs identificateurs de programme stockés dans une mémoire : et
si la première identification n'est pas stockée dans la mémoire, alors stocker la première information caractéristique et la première identification en tant que premier élément de données ; stocker la seconde information caractéristique et la seconde identification en tant que second élément de données ; et lier le second élément de données au premier élément de données ; et
si la première identification est stockée dans la mémoire, alors stocker la seconde information caractéristique et la seconde identification en tant que second élément de données ; et lier le second élément de données à un premier élément de données stocke comprenant la première information caractéristique et la première identification,

2. Procédé selon la revendication 1, dans lequel la première information caractéristique comprend l'un parmi un titre, un genre, une information de directeur et une information d'acteur.

3. Procèce selon l'une quelconque des revendications précédentes, dans lequel la seconde information caractéristique comprend une intrigue, un identificateur d'épisode et une durée de l'épisode de données multimédia.

4. Appareil adapté pour mettre en oeuvre un procédé selon l'une quelconque des revendications précédentes.

5. Programme informatique qui, exécute par un ordinateur, met en oeuvre un procédé selon l'une quelconque des revendications 1 à 3.

6. Support lisible par ordinateur portant un programme informatique selon la revendication 5.
